# EUROPEAN PATENT SPECIFICATION

(11) **EP 1 853 367 B1**
(45) Date of publication and mention of the grant of the patent: **05.08.2009**
(21) Application number: 06727157.7
(22) Date of filing: 28.02.2006
(51) Int. Cl.: B01D 33/03, B01D 33/72, B07B 1/46

(54) **VIBRATORY SEPARATOR AND METHOD FOR SEPARATING SOLIDS FROM A SOLIDS LADEN DRILLING FLUID**
RÜTTELTRENNVORRICHTUNG UND VERFAHREN ZUM ABTRENNEN VON FESTSTOFFEN AUS EINEM MIT FESTSTOFFEN BELADENEN BOHRFLUID
SEPARATEUR VIBRANT ET PROCEDE DE SEPARATION DE MATIERES SOLIDES D'UN FLUIDE DE FORAGE CHARGE DE MATIERES SOLIDES

(30) Priority: 03.03.2005 US 71603; 12.07.2005 US 180037
(43) Date of publication of application: 14.11.2007
(73) Proprietor: Varco I/P, Inc., Houston TX 77042-4200 (US)
(72) Inventor: SCHULTE, David, Lee, JR., Willis, TX 77378 (US); GRICHAR, Charles, Newton, Houston, Texas 77009 (US); MCCLUNG III, Guy, Lamont, Spring, Texas 77379 (US); KOCH, Richard, James, Magnolia, TX 77354 (US)
(74) Representative: Lucas, Brian Ronald
(86) International application number: PCT/GB2006/050042
(87) International publication number: WO 2006/092634

(56) References cited:
- WO-A-02/078866
- SU-A1- 1 488 026
- US-A- 5 690 826
- US-A1- 2002 175 111

## Description

In the drilling of a borehole in the construction of an oil or gas well, a drill bit is arranged on the end of a drill string and is rotated to bore the borehole. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as shale shakers disclosed in US 5,265,730, WO 96/33792 and WO 98/16328.

Shale shakers generally comprise an open bottomed basket having one open discharge end and a solid walled feed end. A number of rectangular screens are arranged in the basket, which are held in C-channel rails located on the basket walls, such as those disclosed in GB-A-2,176,424. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screens fixed thereto to shake. Solids laden mud is introduced at the feed end of the basket on to the screens. The shaking motion induces the solids to move along the screens towards the open discharge end. Drilling mud passes through the screens. The recovered drilling mud is received in the receptor for further processing and the solids pass over the discharge end of the basket into the ditch or skip.

The basket in which the screens are fixed are vibrated using either linear movements or a combination of linear and vertical movements inter alia to facilitate movement of solids along the screen. The combination of linear and vertical vibrations produces a circular, oval or elliptical motion.
This greatly increases the efficiency of the screening process, as the head of fluid in each section can be controlled and thus the correct head of fluid helps push fluid through the screen. Further, the weight of fluid on the screen is controlled and thus the vibratory mechanism has a consistent load, thus preserving the longevity and ability to maintain its correct cycle of operation, i.e. correct ratio of linear to vertical motion when operating in an elliptical motion.

On sloped deck shale shakers (e.g. cascade or parallel flow), the screens may be continuous with one screen covering the entire deck length, or have a divided deck, which has more than one screen used to cover the screening surface, or with individual screens mounted at different slopes. On multiple deck units, more than one screen layer may be employed. In a two or three deck unit, the mud passes through one screen before flowing through the second. The slopes are generally of no more than 10 degrees from horizontal and are generally in an uphill position, such that the solids climb the screens as they progress along the screen.

The motion of the shaker controls the efficiency of separation, rate of travel of cuttings on the screen, solids separation capacity and fluid capacity. The shape and axial direction of the vibration motion along the deck is controlled by the position of the vibrator relative to the deck and the direction of rotation of the vibrator.

Shale shakers have capacity limits. Exceeding a capacity limit means excessive mud will be discharged over the ends along with the solids. Capacity limits are typically defined for non-blinded screens. Capacity limits of a shale shaker include:
1. The solids capacity limit is the maximum amount of solids that a device will remove; and
2. The liquid limit - the maximum GPM capacity for various drilling muds.

The solids capacity limit is encountered when drilling soft, gummy formations. Usually the liquid limit controls the minimum size screen that can be used for a given circulation rate. The thicker the mud, the lower the GPM capacity. Open area of the screens and usable area of the screening deck influence this limit. The solids capacity and/or liquid capacity varies with different shaker designs. In practice, the smallest screen size that can be employed without flooding a unit is used.

The screens are generally of one of two types: hook-strip; and pre-tensioned.

The hook-strip type of screen comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. The supporting mesh may be provided with or replaced by a panel having apertures therein.

The pre-tensioned type of screen comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen is then inserted into C-channel rails arranged in a basket of a shale shaker. An example of this type of screen is disclosed in GB-A-1,578,948.

A further example of a known rigid support is disclosed in PCT Publication No. WO 01/76719, which discloses, amongst other things, a flat panel like portion having apertures therein and wing portions which are folded to form a support structure, which may be made from a single sheet of material. This rigid support has been assigned the Trade Mark "UNIBODY" by the applicants.

Screen assemblies may comprise layers of planar mesh or layers of undulating mesh, such as that disclosed in WO 00/64558. The ridges and troughs of the undulations are arranged to be in line with the flow of solids laden drill mud. The undulations may be of square section as disclosed in WO96/04060

Screen assemblies may also comprise ramps as disclosed in WO 02/078866, so that the solids laden drilling material can flow uphill over the ramp. In such a situation, the fluid can flow back against the trailing face of the ramp, which is steeply raked, to allow high volumes of drilling fluid to wash through the screen. WO 02/078866 also discloses a single wrinkle in the screen, which is of tall triangular cross-section which divides the screen into two planar areas. The wrinkle is wholly screening material and is for removing drilling fluid from on top of the screen as quickly as possible in order to reduce the mass of fluid on top of the screen, and thus decreasing the overall mass on the screen, which decreases the load on the vibratory mechanism.

WO 02/40186 discloses a shale shaker for separating material, the shale shaker comprising a basket for supporting a screen assembly and a collection receptacle, the basket comprising two side walls, an end wall and an opening in the bottom of said basket, said basket having means to support screen assemblies for substantially covering the opening characterised in that the basket further comprises separating means in or on any of said walls for separating material.

SU-1488026, Goldin, discloses a vibratory screening machine for use in mining operations for grading solids. The vibratory screening machine comprises a basket having three downhill screens separated by transverse ribs. The vibratory separator is subjected to circular vibrations. The small solids build up behind the transverse ribs and cause particles moving thereover to zig zag along the width of the screen, facilitating grading.

US-A-5,690,826, Cravello, discloses a screen for a shale shaker, the screen having valleys therein, in line with the flow of material to be separated thereover.

US 2002/0175111, Crabbe, discloses a shale shaker for separating solids from solids laden drilling fluid, the shaker having a solid connecting portion between screens at different levels to facilitate the formation of a pool in part of the shaker. Also disclosed is the use of a contoured screen to facilitate the formation of a pool in part of the shaker.

WO 02/078866, Adams, discloses a screen assembly for a shale shaker, the screen assembly having a major inclined portion and a minor declined portion over which solids laden drilling mud can climb and fall to facilitate separation. Also disclosed is a screen assembly having a raised portion therein for facilitating control of pool depth in a shale shaker.

The layers of mesh in the screen assemblies wears out frequently and therefore needs to be easily replaceable. Shale shakers are generally in the order of 1,52 m (5ft) wide and 3,05 m (10ft) long. A screen of dimensions 1,22 m (4ft) wide by 3,05 m (10ft) long is difficult to handle, replace and transport. It is known to use two, three, four or more screens in a single shale shaker. A standard size of screen currently used is of the order of 1,22 m (4ft) by 0,014 m (3ft).

In accordance with the present invention, there is provided a vibratory separator for separating solids from a solids laden drilling fluid, the vibratory separator comprising a basket, at least one screen and a mechanism for vibrating said at least one screen, said vibratory separator further comprising at least one dam to separate said basket into first and second distinct spaces characterised in that said dam is arranged above said at least one screen and spaced therefrom to allow a portion of solids laden drilling fluid therebetween such that, in use, first and second pools of solids laden drilling fluid form in corresponding first and second distinct spaces.

The gap is preferably adjustable or is fixed to allow solids thereunder, preferably, the largest anticipated size of solids. The gap may be 0.5cm, 1cm, 1.5cm, 2cm, 2.5cm, 3cm, 5cm, 6cm or larger. The gap may span the entire length of the dam, which may be the width of the screen and/or span between sides of the basket. Alternatively, the gap may span a major or minor portion of the length of the dam, which may be the width of the screen and/or span between sides of the basket.

Advantageously, the vibratory separator has side walls, the screen arranged therebetween and the at least one dam extends between, the side walls Preferably, the dam thus controls the head of solids laden fluid in each of the distinct spaces. Advantageously, the at least one dam is positioned within the basket for intercepting material introduced into the basket. Preferably, the first pool of solids laden drilling mud on the first side is deeper than a second pool of material on the second side.

Advantageously, the at least one screen is substantially horizontal. Preferably, the at least one screen is between horizontal and 15° from horizontal. The basket of the shaker may also be adjustable to adjust the rake of the screens fixed therein, usually between -10° and +10°, and more commonly, between -7° and +7°.

Preferably, the at least one screen is a planar screen. Advantageously, the at leat one screen is a corrugated screen. Preferably, the corrugations comprise hills and valley, the hills and valleys running substantially in line with the flow of solids laden drilling mud thereover when in use.

Preferably, the at least one dam comprises a solid barrier. The dam may be made from solid steel, aluminium, plastics material or composite and be substantially impervious to the flow of drilling mud therethrough.

Advantageously, the dam comprises a perforate material. Preferably, to allow a portion of drilling fluid therethrough and to inhibit at least some solids from passing therethrough, the drilling fluid passing directly into the underflow from the shale shaker.

Preferably, the dam further comprises a flow channel to allow drilling fluid to flow into the underflow of drilling fluid from the shale shaker. Preferably, the flow channel flow between the at least one screen or to one side of the at least one screen.

Advantageously, the dam comprises a substantially vertical wall against which the solids laden drilling fluid flows against in use to inhibit flow therepast.

Advantageously, the dam comprises large holes to allow a portion of solids laden drilling fluid thereunder. The holes being large enough to allow the largest solids anticipated therethrough. Thus the holes are in the order of 0.5cm, 1cm, 2cm, 3cm, 5cm, 10cm in diameter or 1 sq cm, 3 sq cm, 20 sq cm, 80 sq cm, or larger, depending on the expected size of the solids, which are generally anticipatable according to the type of formation being drilled through.

Preferably, the at least one dam comprises two spaced apart dams with a gap therebetween. The gap is preferably adjustable to allow a flow of drilling fluid and solids therebetween, preferably, the largest anticipated size of solids.

Advantageously, the at least one dam has two ends and is configured and positioned so that gaps are provided around the two ends within the basket. The gaps is preferably adjustable to allow a flow of drilling fluid and solids thereabout, preferably, the largest anticipated size of solids.

Preferably, the at least one dam is a plurality of spaced-apart dams. Advantageously, the at least one dam is a series of spaced apart dams spanning across the at least one screen. The gap is preferably adjustable to allow a flow of drilling fluid and solids therebetween, preferably, the largest anticipated size of solids.

Advantageously, the basket comprises at least two opposed walls between which is arranged the at least one screen. Preferably, the basket is mounted on springs. Preferably, the vibratory separator further comprises at least one further dam to define a third distinct space in which solids laden drilling mud is separated. Advantageously, the vibratory separator further comprises at least one further dam to define a fourth distinct space in which solids laden drilling mud is separated. A fifth, sixth and seventh dam may be provided to define fifth, sixth and seventh distinct spaces in which solids laden drilling mud is separated.

Preferably, the vibratory further comprises a fitting to allow replacement of said dam. The fitting may comprise rails and removed by sliding the dam down into channel members on either side of the openings and blocking or wedging it in place. Any suitable seal or gasket or sealing material may be used on the screen, on the channels and opening edge, or on both to sealingly position the screen over the opening. Any other suitable method or structure may be used to releasably position and hold the end screen over the end opening, including, but not limited to, channels alone, nuts and bolts, clamps, glue or other adhesive, releasably cooperating fastener material such as VELCRO material, or screws. Any known inflatable structure or bladder, or releasable tensioning bolts may be used to hold a screen in place. Alternatively the dam can be welded, soldered, or brazed at the openings edges. Preferably, the dam is replaceable with a dam of a different size.

Advantageously, the basket is coupled to the mechanism for vibrating the at least one screen and the at least one dam is connected to the basket and vibratable therewith. Preferably, the at least one dam is isolated from the at least one vibrating screen. Preferably, the basket is coupled to the mechanism for vibrating the at least one screen and the at least one dam is isolated from the vibrating basket.

Preferably, the at least one dam is positioned for forming a pool of solids laden drilling mud over the at least one screen. Preferably, two dams are positioned over the at least one screen.

Advantageously, the vibratory separator further comprises at least a second screen wherein the at least one dam is positioned for forming a first pool of solids laden drilling mud over the first screen and second pool of solids laden drilling mud over the second screen.

Preferably, the at least one dam is configured and positioned so that a portion of the solids laden drilling fluid is flowable over the at least one dam. Advantageously, the at least one dam has a first part and a second part, the first part extending substantially vertical with respect to the basket, the second part projecting from the first part and extending non-vertically with respect to the basket.

Advantageously, the basket has a wall, at least one end screen over the at least wall defining a channel through which drilling fluid flows. Preferably, the end wall has an opening therein and a screen arranged over the opening, such that drilling fluid flows therethrough and out of the basket and into a funnel or sump located thereunder. The fitting may comprise rails and removed by sliding the dam down into channel members on either side of the openings and blocking or wedging it in place. Any suitable seal or gasket or sealing material may be used on the screen, on the channels and opening edge, or on both to sealingly position the screen over the opening. Any other suitable method or structure may be used to releasably position and hold the end screen over the end opening, including, but not limited to, channels alone, nuts and bolts, clamps, glue or other adhesive, releasably cooperating fastener material such as VELCRO material, or screws. Any known inflatable structure or bladder, or releasable tensioning bolts may be used to hold a screen in place. Alternatively the screen can be welded, soldered, or brazed at the openings edges. The end screen may be a single integral screen or multiple adjacent end-to-end screens may be used at the basket end. Also, multiple adjacent vertical screens may be used positioned so that fluid from within the basket flows through all of them. Such vertically "stacked" screens may all be mounted within the basket; outside the basket; or one or more of them may be mounted within the basket and one or more of them mounted outside the basket - with appropriate mounting members, gaskets, seals, seal members, and/or bolts and nuts so that fluid flows through the screens and then exits from an outermost screen.

In one aspect the end screen has a plate, mounting structure, or frame and with a lower part that is perforated or has holes or openings so that fluid flowing onto it flows through this part of the frame and out and down into the collection receptacle beneath the basket. [Preferably, replaceable with a dam of a different size] arranged above the at least one screen to allow a portion of solids laden drilling fluid thereunder.

Preferably, the at least one screen comprises a support and screening material on the support. Advantageously, the support is a frame. Preferably, the screening material comprises a at least two layers of screening material overlying each other and preferably connected together, advantageously by a hot melt glue or sewing material.

The invention also provides a method for separating solids from a solids laden drilling mud, the method comprising the steps of introducing solids laden drilling fluid into a vibratory separator having a basket, at least one screen and a mechanism for vibrating the at least one screen, characterised in that at least one dam is arranged to separate the basket into a first and a second distinct spaces the solids laden drilling fluid forming a first pool on one side of the at least one dam and a second pool on the other side of the at least one dam, drilling fluid flowing through the at least one screen from the first and second pools.

Preferably, the dam is arranged vertically or within 45 degrees of vertical in the basket for intercepting material introduced into the basket and for screening said material;.

When the invention is used in conjunction with screen assemblies in the walls of the basket, any known flat, substantially flat, two-dimensional or three-dimensional screen or screen assembly, appropriately sized and configured, may be used in accordance with the present invention to close off one or more end and/or side basket openings. A basket as described above in accordance with the present invention provides more screening area to treat material and separate its components than a conventional basket with the same footprint. By thus increasing the available screening area, the load on the horizontal screen(s) is reduced; their efficiency, and productivity are increased; and total throughput for the basket is increased. Shaker or screen capacity is typically determined by the position of a "fluid-end point". The fluid end-point is the point where the fluid pool stops on the screen surface near the shaker's discharge end. As the fluid-end point moves closer to the discharge end, discharged solids can become too wet, risking whole mud losses over the screen. A typical rule of thumb for optimum shaker capacity specifies covering 66% or less of the shaker's screen surface. The integration of vertical screens into a shaker basket in accordance with the present invention shortens the length of the fluid pool, effectively increasing shaker capacity.

Solid loading has as great an effect on shaker capacity as liquid volume. As solids take up screen area, liquid throughput is impeded due to the moving solids bed on the screen surface. The effect of heavy solids loading on screening capacity is exponential. Heavy solids loading creates a condition for fluid to ride on top of the moving solids bed, and creates conditions susceptible to whole mud losses. One solution to this problem has been to use coarser screens to prevent whole mud losses. This solution solves the immediate concern for the loss of whole mud, but may be at the expense of poor solids control.

The motion of the basket conveys solids away from the vertical screen(s) at the rear and/or sides of the shaker basket. Thus some portion of the fluid in the pool that exits through end and/or side basket screen(s) in accordance with the present invention bypasses the traditional routing of prior art baskets, thereby enhancing shaker capacity.

In certain aspects, the end screen in a basket in accordance with the present invention is at such an angle to the direction of the force of strokes of the vibrating apparatus that separation is enhanced as compared to the angle of these strokes with respect to the horizontal.

For a better understanding of the present invention, reference will now be made, by way of example, to the accompanying drawings, in which:
Figure 1 is a perspective view of a prior art shale shaker;
Figure 2 is a schematic diagram of a prior art system for processing used drilling fluid incorporating a shale shaker in the drilling of an oil or gas well;
Figure 3 is a perspective view of a prior art shale shaker;
Figure 4 is a side view of a prior art shale shaker in use, with some hidden parts shown;
Figure 5A is a side view of a shale shaker in accordance with the present invention;
Figure 5B is a perspective view of part of a screen assembly for use in the shale shaker shown in Figure 5A;
Figure 5C is a cross-sectional view taken from line 5C-5C shown in Figure 5A;
Figure 5D is a cross-sectaional view of part of the shale shaker shown in Figure 5A;
Figure 5E is a side view of part of a basket in accordance with the present invention;
Figure 5F is a perspective view of a screen assembly for use in a shale shaker in accordance with the present invention;
Figure 5G is a side view of a basket with some hidden parts shown in dotted lines, the shale shaker in accordance with the present invention;
Figure 5H is a schematic view of a basket of a shale shaker taken from above with parts omitted for clarity;
Figure 6A is a perspective view of a screen assemby for use in a shale shaker of the present invention;
Figure 6B is a front view of a perforated plate type screen assembly for use in a shale shaker in accordance with the present invention;
Figure 6C is a view in cross-section of the perforate plate type screen assembly shown in Figure 6C-6C taken along line 6C-6C;
Figure 6D is a top view of a screen assembly in accordance with the present invention;
Figures 7A - 7F are perspective views of baskets in accordance with the present invention;
Figure 8 is a perspective view of a plate or sheet for a basket for a shale shaker in accordance with the present invention;
Figure 9A is a schematic side view of a shale shaker in accordance with the present invention, with some hidden parts shown;
Figure 9B is a top view of a dam of the shake shaker shown in Figure 9A;
Figure 9C is a front view of the dam shown in Figure 9B;
Figure 10 is a schematic side view of a shale shaker in accordance with the present invention, with some hidden parts shown;
Figure 11 is a schematic side view of a shale shaker in accordance with the present invention, with some hidden parts shown;
Figure 12 is a schematic side view of a shale shaker in accordance with the present invention, with some hidden parts shown;
Figure 13A to 13G are each a top view of a dam in a shale shaker in accordance with the present invention;
Figure 14A to 14I are each a front view of a dam for a shale shaker in accordance with the present invention;
Figure 15 is a schematic side view of a shale shaker in accordance with the present invention, with some hidden parts shown;
Figure 16 is a schematic side view of a shale shaker in accordance with the present invention, with some hidden parts shown;
Figure 17 is a perspective view of a dam for use in a shale shaker in accordance with the present invention;
Figure 18 presents end views of dams for shale shakers in accordance with the present invention.

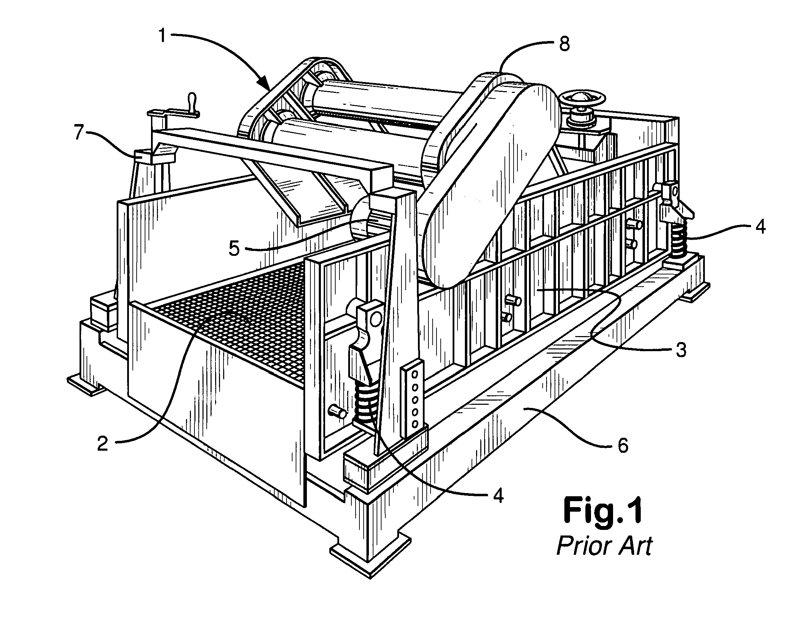

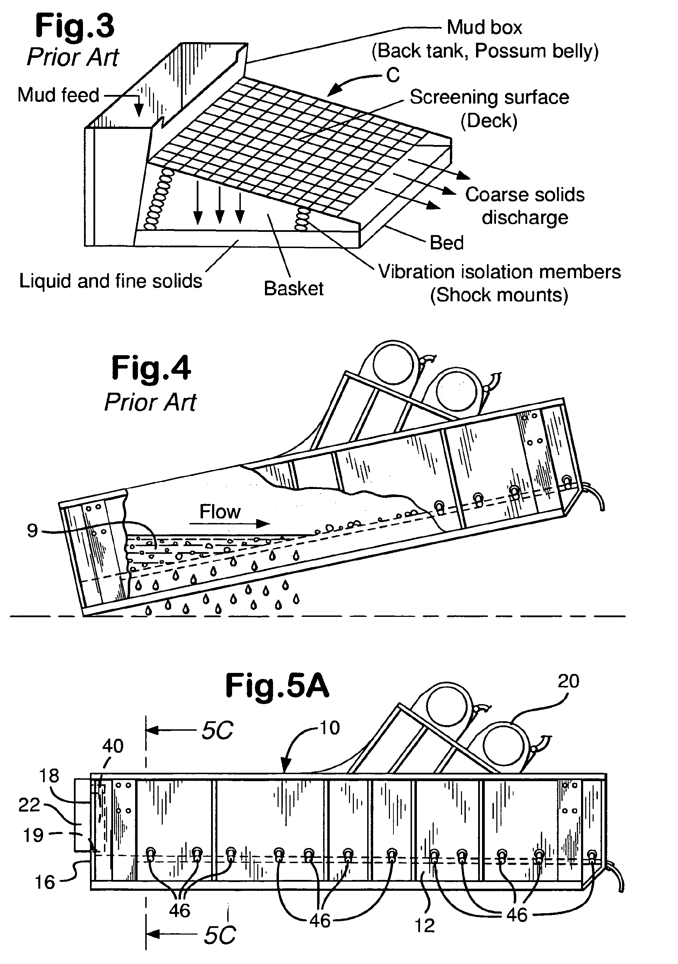

Referring now to Figure 1, there is shown a prior art shale shaker 1 having a screen 2 (with screen or screening cloth or mesh as desired) mounted on vibratable screen mounting apparatus or "basket" 3. The screen 2 may be any known screen or screens. The basket 3 is mounted on springs 4 (only two shown; two as shown are on the opposite side) which are supported from a frame 6. The basket 3 is vibrated by a motor 5 and interconnected vibrating apparatus 8 which is mounted on the basket 3 for vibrating the basket and the screens. Elevator apparatus 7 provides for raising and lowering of the basket end. Typically the basket will be in a "climb the hill" position (see Figure 4) so that a pool 9 of liquid is maintained at one end within the basket. Drilling mud laden with drill cuttings is introduced at a feed end shown in Figure 1 as the far right hand end of the shale shaker. The vibrations induced in the screen assembly induce movement of solids along the screen assemblies 2 from the feed end to the discharge end, shown on the right hand side of Figure 1.

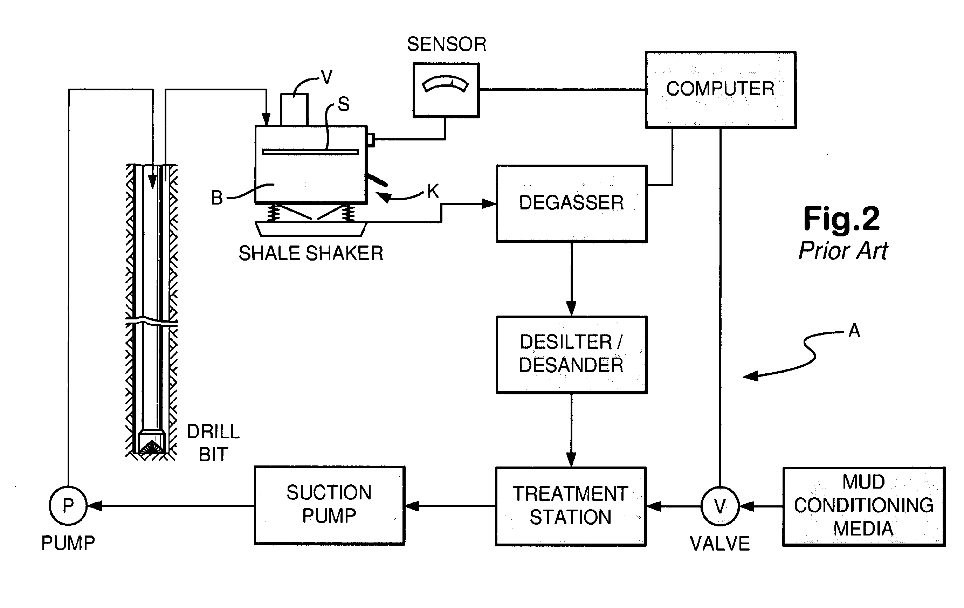

Figure 2 discloses one example of a typical prior art system for processing drilling mud (e.g. as shown in U.S. Patent 5,190,645). The system A has a shale shaker K having a screen or screens S. The screen(s) S are mounted in a typical shaker basket B and one or more vibrators V (any known suitable shaker vibrator) vibrate the basket B and hence the screen(s) S. The other components of the system A are as described in U.S. Patent 5,190,645. The underflow from the shale shaker may be further processed in a degasser, desilter, desander, centrifuge or hydrocyclone and then flowed into a holding tank. Further additives or chemicals may be added to the drilling mud before being pumped back through the drill string to the drill bit boring the well. The drilling mud inter alia picks up drill cuttings from the drill bit, flows up an annulus formed between the drill string and the formation and/or casing lining the well and flows into the shale shaker and the process is repeated. The system may be controlled by a computer.

Figure 3 shows schematically a prior art shale shaker apparatus C with a Mud Box (Back tank, Possum Belly) to distribute the flow to a screening surface. The screens are mounted in a Deck (Basket) which is vibrated to assist the throughput of mud and movement of separated solids. The deck rests on Vibration Isolation Members, such as helical springs or rubber mounts. The vibration isolation members rest on the support member, which is also used to divert flow as desired, and is called a Bed. There are many deck, basket configurations used depending on the design criteria. The deck, basket, may be flat, horizontal, or mounted at a slope.

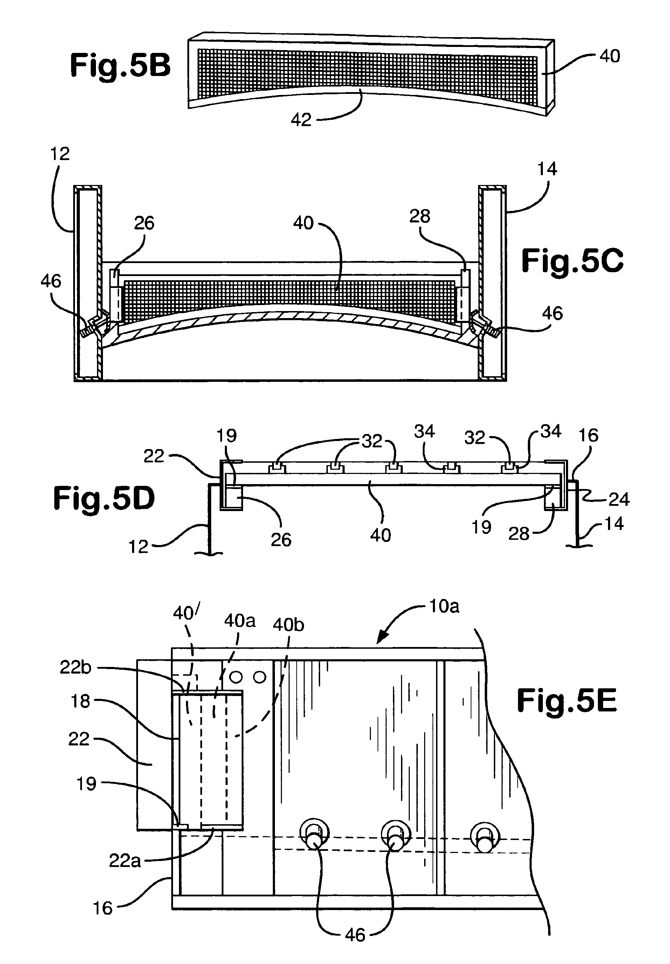

Referring now to Figures 5A to 5D, a screen-supporting basket 10 for a vibratory separator or shale shaker has two spaced-apart side walls 12, 14 and an end wall 16 between them. Typical vibrator apparatus 20 is connectible to the basket 10. An end screen 40 is mounted in channels 22, 24 on opposite sides of the end wall 16. Screen mounting apparatus 46 may be any such known apparatus.

In one aspect the channels 22, 24 are open at the top so the screen 40 can be introduced into the space between the channels 22, 24, such that the screen 40 can be replaced or changed for a screen having a different mesh size or filtering characteristics. Optional removable blocks 26, 28 on the interior of the basket hold the screen 40 in place in the channels; and optional crown bars 32 on the screen 40's exterior provide support for the screen 40. In one aspect each crown bar 32 has a rubber part 34 that contacts the screen 40. Screening material on the screen 40 (as on any screen in accordance with the present invention) may be any suitable known screening material, including, but not limited to one, two, three or more layers of known screening material and/or mesh, two-dimensional or three-dimensional, bonded, glued, connected or unconnected. The crown bar may be crowned against which the screen can be fitted to improve its rigidity in situ.

The screen 40 may, optionally, have a curved lower portion 42 that corresponds to a curved-shape assumed by screens (not shown) mounted in the basket 10.

The screen 40 is emplaced over an opening 18 in the end wall 16. Optionally a sealing gasket 19 or other seal material or seal member is used around the opening 18.

A basket 10 (and any basket in accordance with the present invention) may be used with any suitable known shaker or separator.

Figure 5E shows another embodiment 10a of a basket 10 with multiple vertical end screens 40 (as above), 40a, and 40b supported on lower part 22a of the channel 22 and positioned beneath upper part 22b of the channel 22. Alternatively, the screens may have appropriate frames or other mounting members and/or structure so that they can be bolted in place. The screens 40a and 40b may be like the screen 40 with the screening material described for the screen 40 (and like numerals in Figures 5A and 5E are for like items). Each screen may have similar or different screening material. Two, three, four or more such screens may be used at a basket end and/or side(s) with screens positioned within or outside the basket.

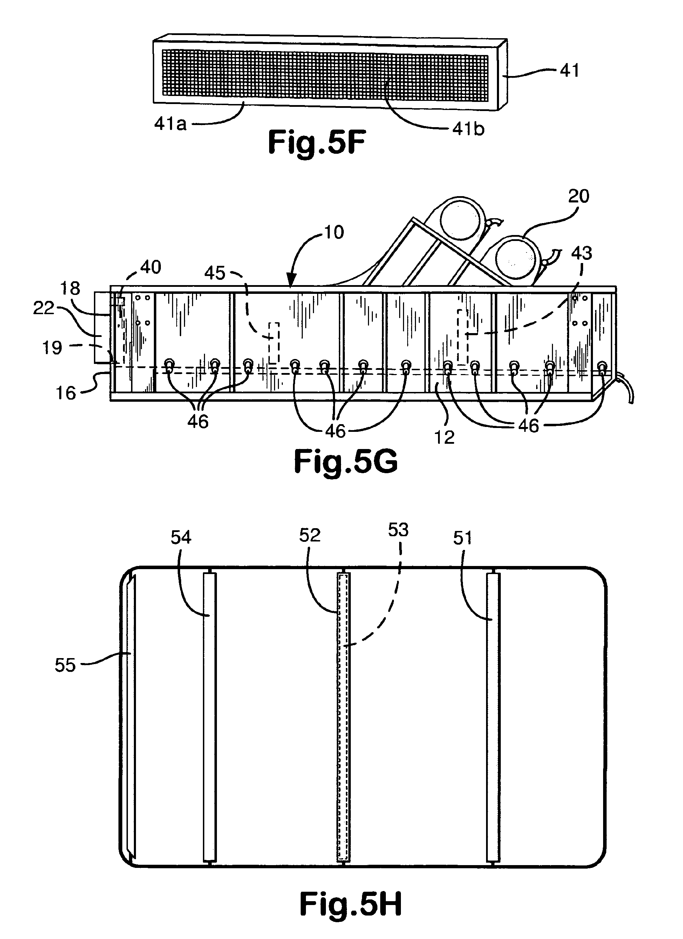

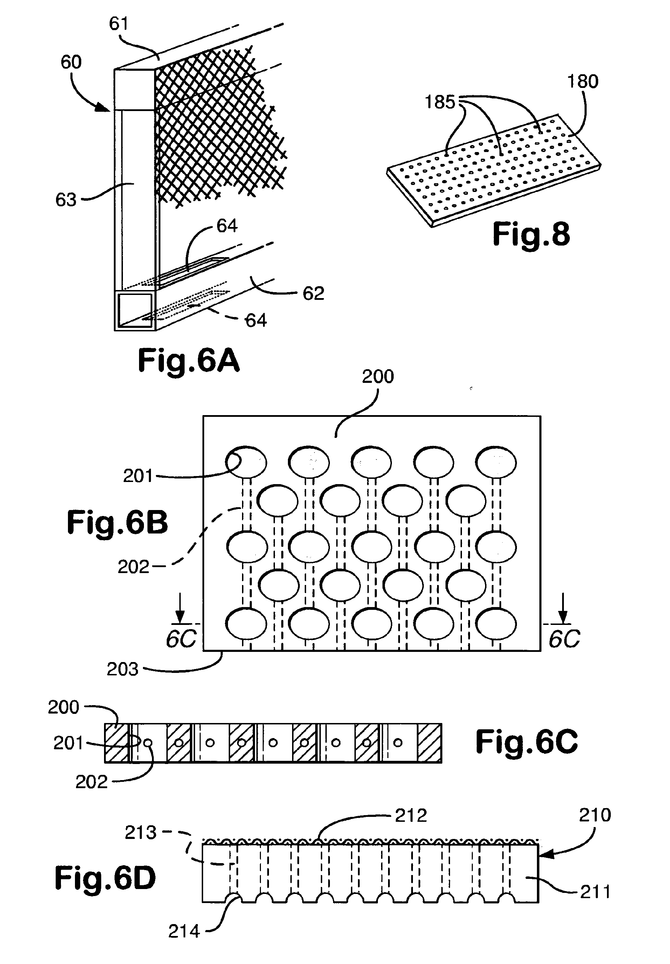

Figure 5F shows a screen assembly 41 having a frame 41a and screening material 41b (which may be any screening material layer or layers referred to herein). In one aspect the screen assembly 41 has a frame 41a like the frame of the frame in Figure 6A with one, two, three, four, five or more holes (like the holes 64). Alternatively, there are no holes like the holes 64 in the frame 41a (as there are in the frame in Figure 6A) and material flows from one side of the frame 41a to the other through the screening material 41b. With one or more holes (like the holes 64) present in the frame 41a some of the material to be treated flows through screening material into the hole(s) and some of the material to be treated (e.g., but not limited to, drilling cuttings material) flows from one side of the frame to the other through the screening material 41b. In one aspect the screen 40, Figure 5B, optionally, has hole(s) like the holes 64, Figure 6A. Any screen assembly 40 or 41 may have a plate as in Figures 6B - 6D and/or as in Figure 8.

Figure 5G illustrates a basket 10a in accordance with the present invention, like the basket 10, Figure 5A, and like numerals indicate like parts. The basket 10a includes a screen assembly 43 and a screen assembly 45 mounted therein. It is within the scope of the present invention to delete one or two of the screen assemblies 40, 43, 45 and/or to have one or two additional screen assemblies 40, 43 and/or 45 spaced apart in the basket 10a. The screen assemblies 43, 45, or either of them, may be like the screen assembly 40, the screen assembly 41, or any screen assembly in accordance with the present invention.

As shown the screen assembly 43 is taller than the screen assembly 45. In accordance with the present invention, this may be reversed with the screen assembly 43 in the position of the screen assembly 45 or both screen assemblies may be the same height. In certain aspects the screen assemblies are sufficiently high that little or no material to be treated flows over the top of a screen assembly. In other aspects in accordance with the present invention the screen assemblies or one of them are of such a height that a portion (e.g., but not limited to, one fourth; one half, or three-fourths) of the material first encountering a screen assembly flows over the top thereof.

Figure 5H shows a basket 10b in accordance with the present invention with four screen assemblies 51, 52, 54, 55 mounted therein (e.g. like the screen assemblies 40, 43, and/or 45). The screen assemblies 51, 52, 54, 55 or any of them may be as any screen assembly in accordance with the present invention, including, but not limited to, the screen assemblies 40, 41, 43, and/or 45 in any of their embodiments described above. In one particular aspect, the screen assembly 52 (and also the screen assemblies 51, 54, and 55) have a hole or holes like the holes 64, Figure 6A and material flowing to and through the hole(s) flows into an opening 53 in the bottom of the basket 10b and then into a lower receptacle beneath the basket (and any of the other screen assemblies may be so mounted above an opening like the opening 53).

Any one, two, or three of the screen assemblies in Figure 5H may be deleted.

Also, one or some of the screen assemblies may be mounted above an opening like the opening 53 while the remaining screen(s) are not mounted above such an opening.

Any of the screen assemblies in Figures 5A - 5H may be used with any known basket or with any basket in accordance with the present invention (providing, with respect to known baskets openings, as desired, are provided in accordance with the present invention through the screen((s)) in the bottom of the basket).

Figure 6A shows part of a tubular frame 60 used as a screen support for screening material for a screen assembly in accordance with the present invention for use in a vibratory separator or shale shaker. The frame 60 has a top member 61 and a bottom member 62. A plurality of cross members 63 (one shown) interconnect the top and bottom members. One, two, three, four, or more holes 64 (or a series of perforations through the bottom member 62) provide for fluid flow through the bottom member 62 (shown as hollow; solid bottom members with one or more holes or perforations may be used). In one aspect the top member also has such a hole or holes 64.

Figures 6B and 6C show a perforated plate 200 for supporting screening material (not shown) for a screen assembly for a vibratory separator, particularly for an end screen or side basket screen in accordance with the present invention as described herein. The perforated plate 200 has a plurality of spaced-apart openings 201 or holes extending through the plate from one surface to the other. A second series of spaced-apart openings 202 or holes extend from the topmost row of openings 201 (as viewed in Figure 6B) to a bottom side 203 of the plate 200. Openings 202 intersect openings 201 so that fluid flowing into an opening 201 can flow down (as viewed in Figure 6B) and out from the plate 200, e.g. into a receptacle of a vibratory separator or shale shaker beneath a basket in which is mounted a screen assembly with such a plate.

It is within the scope of this invention for any known perforated plate or perforated member used as a support for a screen assembly which has a known series of spaced-apart perforations, holes, openings, etc. to have a second series of perforations, openings or holes (e.g. but not limited to like the holes 202) at any desired angle to the perforations, holes or openings, etc. through the plate (including, but not limited to at a right angle as shown in Figure 6B) to conduct fluid through the plate as is done by the plate 200.

Figure 6D shows a screen assembly 210 for a vibratory separator, in accordance with the present invention, with a perforated plate 211 for supporting screening material 212 on the plate 211, particularly for an end screen or side basket screen in accordance with the present invention as described herein. The perforated plate 211 has a plurality of spaced-apart openings 213 or holes extending through the plate from one surface to the other. A series of spaced-apart grooves 214 or notches extend from one side of the plate 211 to the other and intersect the openings 213 so that fluid flowing into an opening 213 can flow down and out from the plate 211, e.g. into a receptacle of a vibratory separator or shale shaker beneath a basket in which is mounted a screen assembly with such a plate. There may be multiple holes 213 under each hole 213 as viewed in Figure 6D across the plate's surface. The screening material 212 may be any disclosed herein and/or any known in the art.

It is within the scope of this invention for any known perforated plate or perforated member used as a support for a screen assembly which has a known series of spaced-apart perforations, holes, openings, etc. to have a second series of grooves or notches (e.g. but not limited to like the grooves 214) at any desired angle to the perforations, holes or openings, etc. through the plate (including, but not limited to at a right angle as shown in Figure 6D) to conduct fluid down the plate as is done in the plate 211.

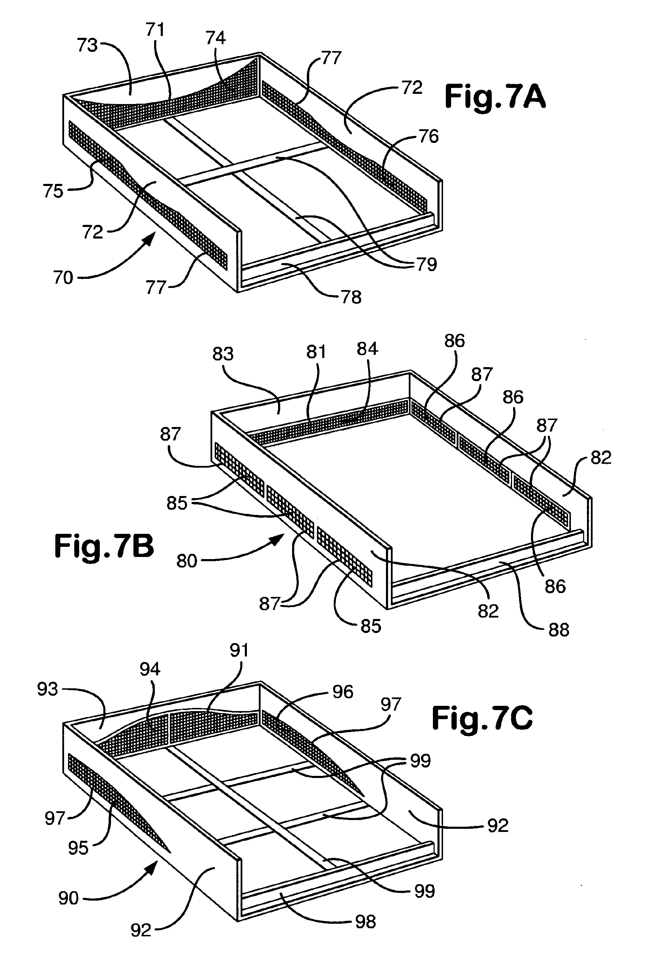

Figures 7A - 7F show various baskets for use in a shale shaker in accordance with the present invention. The baskets are provided with mountings for intermediate vertical screens or dams for separating the shale shaker into discrete pools preferably, for retaining a maximum predetermined depth of fluid in each discrete pool.

Figure 7A shows a basket 70 with sidewalls 72, end wall 73, and cross-braces 79 on which screens for treating fluid introduced into the basket are to be mounted. End wall 73 has an end screen 74 over an end opening 71 for treating fluid introduced to the basket 70. Side screens 75, 76 are mounted over side openings 77 in the side walls 72. An end brace 78 is interconnected between side walls 72 at an exit end of the basket 70 (opposite the other end at which fluid is introduced into the basket).

Figure 7B shows a basket 80 with side walls 82, end wall 83, in which screens for treating fluid introduced into the basket are to be mounted. End wall 83 has an end screen 84 over an end opening 81 for treating fluid introduced to the basket 80. Side screens 85, 86 are mounted over side openings 87 in the side walls 82. An end brace 88 is interconnected between side walls 82 at an exit end of the basket 80 (opposite the other end at which fluid is introduced into the basket).

Figure 7C shows a basket 90 with side walls 92, end wall 93, and cross-braces 99 on which screens for treating fluid introduced into the basket are to be mounted. End wall 93 has an end screen 94 over an end opening 91 for treating fluid introduced to the basket 90. Side screens 95, 96 are mounted over side openings 97 in the side walls 92. An end brace 98 is interconnected between side walls 92 at an exit end of the basket 90 (opposite the other end at which fluid is introduced into the basket). Fixings for vertical screens or dams may be provided next to each cross-brace 99 spanning the width of the basket 90.

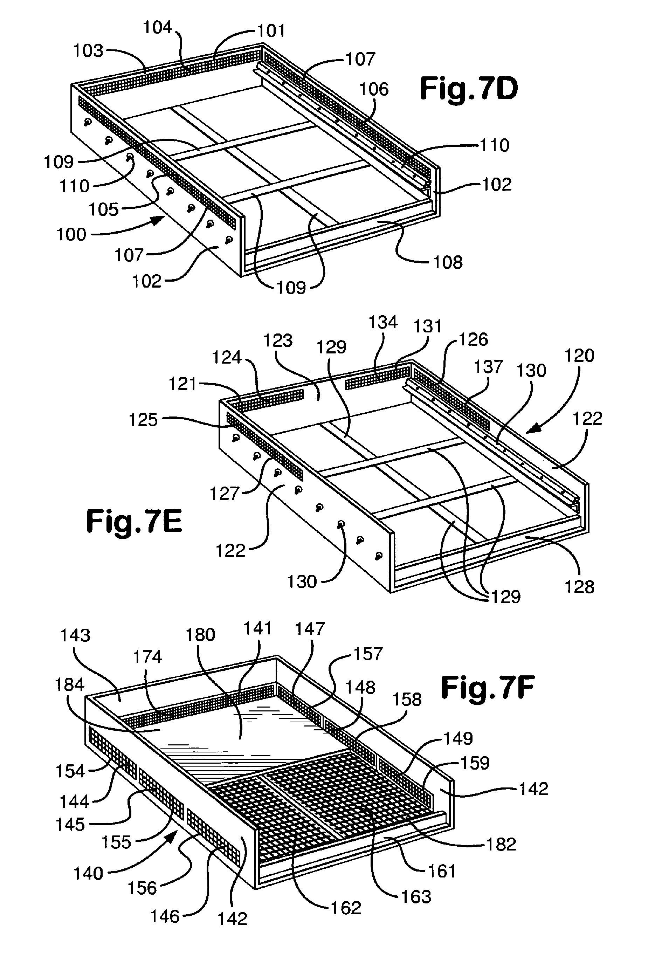

Figure 7D shows a basket 100 with side walls 102, end wall 103, and cross-braces 109. End wall 103 has an end screen 104 over an end opening 101 for treating fluid introduced to the basket 100. Side screens 105, 106 are mounted over side openings 107 in the side walls 102. An end brace 108 is interconnected between side walls 102 at an exit end of the basket 100 (opposite the other end at which fluid is introduced into the basket). Mounting apparatus 110 (any known in the art) is used to mount screens in the basket 100. Fixings for vertical screens or dams may be provided next to each cross-brace 99 spanning the width of the basket 90.

Figure 7E shows a basket 120 with side walls 122, end wall 123, and cross-braces 129. End wall 123 has end screens 124, 134 over end openings 121, 131 for treating fluid introduced to the basket 120. Side screens 125, 126 are mounted over side openings 127, 137 in the side walls 122. An end brace 128 is interconnected between side walls 122 at an exit end of the basket 120 (opposite the other end at which fluid is introduced into the basket). Mounting apparatus 130 (any known in the art) is used to mount screens in the basket 120. Fixings for vertical screens or dams may be provided next to each cross-brace 99 spanning the width of the basket 90.

Figure 7F shows a basket 140 with side walls 142, end wall 143, and screens 162, 163 mounted on the basket for treating fluid introduced into the basket. End wall 143 has an end screen 174 over an end opening 141 for treating fluid introduced to the basket 140. Side screens 144, 145, 146, 147, 148, 149 are mounted over side openings 154, 155, 156, 157, 158, 159 in the side walls 142. An end brace 161 is interconnected between side walls 142 at an exit end 182 of the basket 140 (opposite the other end at which fluid is introduced into the basket). A solid sheet or plate 180 is mounted in the basket at the fluid introduction end 184 opposite the solids exit end 182. The solid sheet or plate 180 performs no fluid treatment function of separating components of a fluid introduced into the basket 140. The end screen 174 and side screens and/or side screen portions adjacent the solid sheet or plate 180 do perform a fluid component separation function. It is within the scope of this invention for the solid sheet or plate to be sized so that it underlies a pond or pool (e.g. as shown in Figure 4, item 9). It is also within the scope of this invention for the solid sheet or plate to extend from the end wall 143 toward the exit end 182 six inches, one foot, eighteen inches, two feet, thirty inches, three feet, forty two inches, four feet, or any desired amount. Alternatively, the sheet or plate 180 may have a series of slits, slots, holes, openings and/or perforations therethrough so that the sheet or plate 180 does perform a fluid component separation function; and, in one such embodiment, the slits, slots, holes, openings and/or perforations (collectively referred to as "holes") are of a size like that of a finest screen mesh on top of a screen or screens used for the screens 162, 163. Any screen or screen assembly may be used in the basket 140. Any sheet or plate 180 may be used in any known basket or any basket in accordance with the present invention.

Figure 8 shows a plate 180 with a plurality of perforations 185 therethrough.

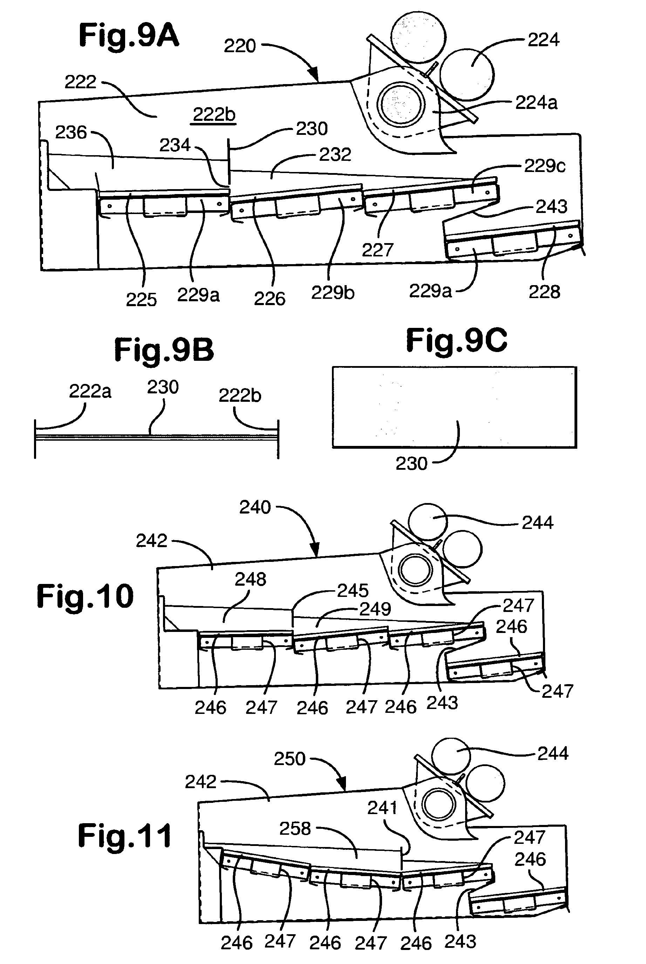

Fig 9A shows a shale shaker 220 with a basket 222 and vibratory apparatus 224 mounted on mount 224a. Screens 225, 226, 227, and 228 are secured to mount apparatuses 229a, b, c and d within the basket 222. A dam 230 extends across the basket 222 between sidewalls 222a and 222b thereof and is positioned so that material 232 to be treated by the shale shaker 220 can flow beneath the dam 230 through an opening 234 formed between the lower edge of the dam 230 and the upper surface of the screen 225. The dam 230 creates a larger pool 236 of material than would be present if the dam was not used. It is to be understood that although a shale shaker is shown the dam 230 (and any dam or dams in accordance with the present invention) may be used with any vibratory separator which treats material that can form a pool. The material may be drilling fluid with solid contaminates. As with any shaker or separator herein in accordance with the present invention, any desired number of screens may be used. Any known prior art screen or screen assembly may be used.

Figure 10 shows a shale shaker 240 similar to the shale shaker 220, but with a dam 245 designed and sized so that a portion of material 249 to be treated flows over the dam 245. The dam 245 assists in forming a pool 248 of the material 249 over a screen 246. Screens 246 are mounted to mounts 247.

Any of the shakers of Figures 9A, 10, 11, 12, 15, and 16, and any shaker in accordance with the present invention may, optionally, have a backflow plate 243 to conduct material that has flowed through a screen away from a lower screen.

A shale shaker 250 shown in Figure 11 is like the shaker 240 of Figure 10 and like numerals indicate like parts. A dam 241, like the dam 230, Figure 9A, is located at the end of a second screen (as viewed from the left side of the shaker 250 as shown in Figure 11). Thus a pool 258 of material is formed above two screens instead of above one screen as in Figure 9A. It is within the scope of the present invention for any shaker or separator in accordance with the present invention to have a dam positioned as in Figure 11 (and/or as in any of Figures 9A, 12, and 15).

It is within the scope of the present invention for any dam herein in accordance with the present invention and/or any dam connector herein in accordance with the present invention to be made from plastic, composite, fiberglass, metal, zinc, steel, stainless steel, aluminum, brass, bronze, zinc alloy, aluminum alloy or wood.

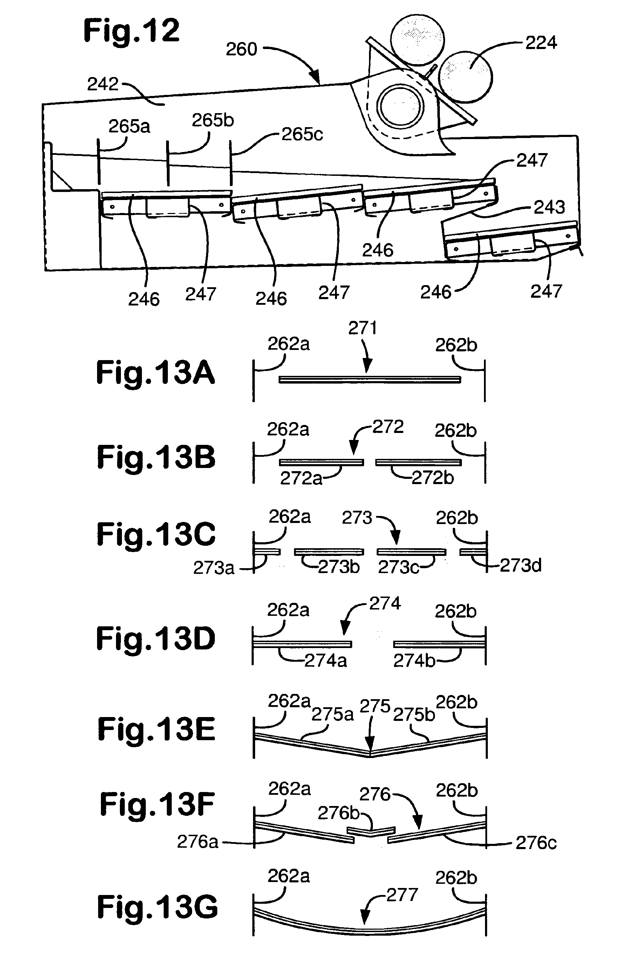

Any shaker or separator in accordance with the present invention may have multiple dams located at any point or points. As shown in Figure 12, in a shaker 260 multiple dams 265a, 265b, and 265c are located above a first screen 246 (optionally, any one of these dams may be deleted; with dam 265a deleted, two pools are formed above the screen assembly 246 beneath the dams). The shaker 260 is like the shaker 240 and like numerals indicate like parts. It is to be understood for the shakers and separators of Figures 9A - 16 that treated material flows through the screen(s) down to a collection tank or receptacle.

Figures 13A to 13G present top views of dams in accordance with the present invention (like the dams of Figures 10, 11, 12, 15 and 16 or for any dam in accordance with the present invention). The dams of Figures 13D - 13G may be reversed in position as viewed in these figures. Any dam herein may have a size such that flow is possible beneath the dam between the dam and an upper surface of a screen positioned below the dam.

Figures 13A to 13G each include basket sidewalls 262a, 262b of a basket (not shown). Figure 13A shows a dam 271 sized and located so that flow of material to be treated is possible around its two ends.

Figure 13B shows a dam 272 with parts 272a, 272b, with spaces at the ends thereof adjacent the basket walls and a central space for flow.

Figure 13C shows a dam 273 with parts 273a, 273b, 273c and 273d with spaces therebetween for flow.

Figure 13D shows a dam 274 with parts 274a and 274b with a central space therebetween for flow.

Figure 13E shows a dam 275 with two parts 275a, 275b which form a generally pointed V-shaped dam when viewed from above.

Figure 13F shows a dam 276 with parts 276a, 276b, and 276c with flow spaces between the parts.

Figure 13G shows a dam 277 which is generally curved as viewed from above.

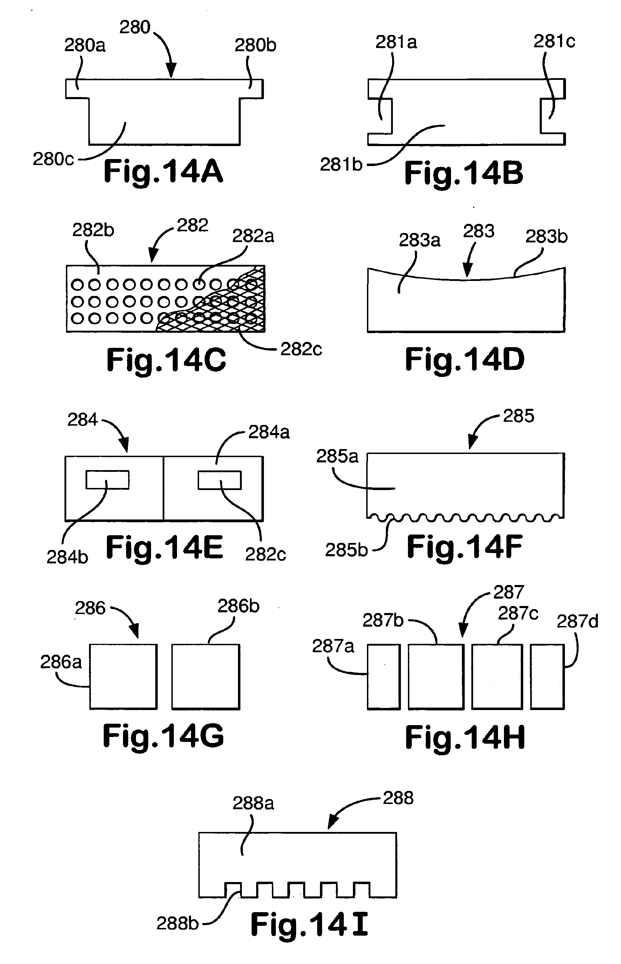

Figures 14A to 14I illustrate various possible configurations for dams in accordance with the present invention showing various possible front views. Any of the dams of Figures 14A to 14I may be inverted in use. The bottom structure of the dams of Figures 14F and 14I may be provided at the top thereof, at the top of any dam in accordance with the present invention, and/or at the bottom of any dam in accordance with the present invention. Any dam in accordance with the present invention may have one or more holes therethrough of any desired shape or number and, in one aspect, one, two, three or more layers of mesh or screening material may cover such hole(s).

Figure 14A shows a dam 280 in accordance with the present invention with two end shoulders 280a, 280b. The end shoulders 280a, 280b of a body 280c may be located within a basket so that flow is possible under them; they may be located above basket walls with the dam in contact with the interior of the basket walls; or they may be located above the basket walls with the dam sized so that flow is possible beneath the shoulders between the dam and the interior of the basket walls.

Figure 14B shows a dam 281 with a body 281b with open areas 281a and 281c for flow of material through the dam 281. These open areas are shown as generally rectangular but they may be any suitable shape.

Figure 14C illustrates that any dam in accordance with the present invention may have one or a plurality of spaced-apart holes or openings for flow therethrough. A dam 282 has holes 282a in a body 282b. Optionally any dam in accordance with the present invention with one or more holes may have screening material (e.g. any known screening material with any known layer or layers) over the holes on one or on both sides of the dam. For example, as shown in Figure 14C, screening material 282c covers the holes 282a (screening material shown partially, but understood to cover all holes 282a). Similarly any flow space or opening between any dam's parts may have such screening material. Holes or perforations may be provided across substantially all of a dam's surface area or on only a portion thereof.

Figure 14D shows a dam 283 with a body 283a with a generally curved trop 283b.

Figure 14E shows a dam 284 with a body 284a having openings 284b and 284c therethrough.

Figure 14F shows a dam 285 with a body 285a that has a lower corrugated edge 285b.

Figure 14G shows a dam 286 with two spaced-apart parts 286a and 286b with a space therebetween for flow.

Figure 14H shows a dam 287 with parts 287a - 287d with spaces therebetween for flow.

Figure 14I shows a dam 288 with a body 288a having a lower slotted edge 288b. The lower edge of a dam in accordance with the present invention, e.g., but not limited to, as shown in Figures 14F and 14I, may be shaped to correspond to the shape of a screen above which the dam is located to contact the screen or to provide flow channels between the screen and the dam.

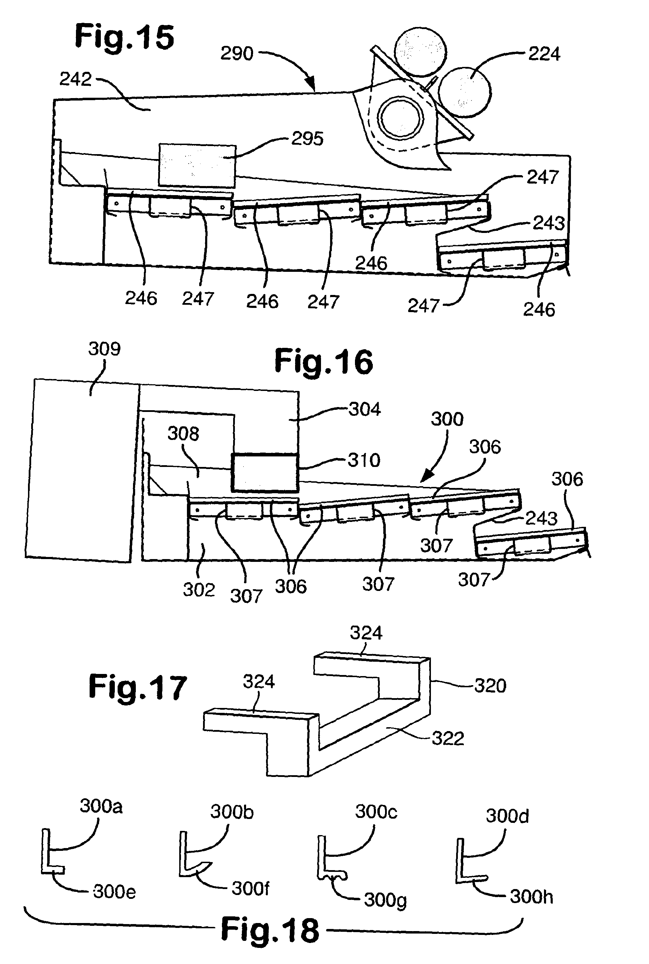

Shale shaker 290 shown in Figure 15 is like the shale shaker 240, described above, and like numerals in the Figures indicate like parts. A dam 295 which extends between walls of the shaker is a solid or hollow 3-dimensional dam. As with any dam in accordance with the present invention, it may have holes or openings through it as described herein and it may be sized and located with a flow path beneath it. It may be multi-part (e.g. as the previously-described multi-part dams, but in 3-D) and it may be any desired general shape in addition to the generally rectangular shape, shown in Figure 15 (e.g., but not limited to viewed from side and/or top and/or front, square, oval, or elliptical).

Figure 16 shows a shale shaker 300 in accordance with the present invention with a basket 308 vibrated by vibratory apparatus (not shown; as with any shaker herein any suitable vibratory apparatus may be used). The shaker 300 has screens 306 on mount apparatus 307 and a dam 310 that extends between the walls (touching the walls or not, connected to the basket, or mounted to structure other than the basket and/or to structure that does not vibrate with the basket) of the basket 308 (the dam 310 like any dam herein in accordance with the present invention, flat or 3-D). A connector 304 connects the dam 310 to a tank 309 or, optionally, to any other part of the structure or adjacent structure so that the dam does not vibrate with the basket 308. A dam that does not vibrate with the basket has mass that is not vibrated, thereby reducing power requirements. A dam that is not vibrated can, in some instances, be required to meet less stringent strength and durability requirements. A dam not connected to the basket which does not vibrate with the basket does not affect a basket's integrity or performance. To the extent that part of a dam is in a pool of fluid, the depth of the pool is increased and, to that extent the head of fluid on a screen or screens is increased thereby increasing the throughput of material through the screen. Any dam in accordance with the present invention can be connected to a basket and vibrate therewith or connected to structure other than the basket so it does not vibrate with the basket.

Figure 17 shows a dam 320 with a main dam body 322 and connectors 324 for connecting the dam 320 to other shaker structure (structure other than a basket). The connectors 324 may be any suitable size and may be separate pieces connected to the main body 322 or, as shown, the dam and connectors may be a single integral piece. Any dam in accordance with the present invention may have such connectors.

Any dam in accordance with the present invention may have a generally rectangular cross-section when viewed on end, e.g. as the dams in Figures 9A, 9C, 11 and 12. Alternatively any dam in accordance with the present invention may have a shape, when viewed on end and in position, e.g., as a dam in Figure 9A, which includes a lower non-vertical member such a the dams 300a, 300b, 300c and 300d shown in Figure 18 which have, respectively, lower non-vertical members 300e (substantially horizontal), 300f (curved upwardly), 300g (wavy), and 300h (inclined upwardly). In use any dam may be positioned so that its cross-section viewed on end is a mirror image of the dams as shown in Figure 18. Any dam in accordance with the present invention may have one of the non-vertical members shown in Figure 18. Any screen assembly in Figures 5F - 5H may be replaced by any dam in accordance with the present invention and by any dam in Figures 9A - 18.

In those embodiments in which a dam does not vibrate with a basket, and there is a flow space between the bottom of the dam and the top of the basket's floor, the basket floor moves up and down with respect to the bottom of the dam as the basket vibrates. Due to this action, material underneath the dam is subjected to forces which facilitate screening action of screening material located beneath the dam, thereby increasing the throughput of material through that portion of the screening material.

## Claims

1. a vibratory separator for separating solids from a solids laden drilling fluid, the vibratory separator comprising a basket (220), at least one screen (225,226) and a mechanism (224) for vibrating said at least one screen, said vibratory separator further comprising at least one dam (230) to separate said basket (220) into first (236) and second (232) distinct spaces **characterised in that** said dam (230) is arranged above said at least one screen (225) and spaced therefrom to allow a portion of solids laden drilling fluid therebetween such that, in use, first and second pools of solids laden drilling fluid form in corresponding first (236) and second (232) distinct spaces.

2. A vibratory separator as claimed in Claim 1, wherein said vibratory separator has side walls (222), said screen arranged therebetween and said at least one dam extends between said side walls.

3. A vibratory separator as claimed in Claim 1 or 2, wherein said at least one screen (225) is substantially horizontal.

4. A vibratory separator as claimed in Claim 1 or 2, wherein said at least one screen (226) is between horizontal and 15° from horizontal.

5. A vibratory separator as claimed in any preceding claim, wherein said at least one screen (225,226) is a planar screen.

6. A vibratory separator as claimed in any preceding claim, wherein said at least one screen (225,226) is a corrugated screen.

7. A vibratory separator as claimed in any preceding claim, wherein said at least one dam (230) comprises a solid barrier.

8. A vibratory separator as claimed in any preceding claim, wherein said at least one dam (60) comprises a perforate material.

9. A vibratory separator as claimed in any Claim 8, wherein said at least one dam (60,200) further comprises a flow channel (64,202) to allow drilling fluid to flow into the underflow of drilling fluid from the vibratory separator.

10. A vibratory separator as claimed in any preceding claim, wherein said at least one dam (45) comprises a substantially vertical wall against which said solids laden drilling fluid flows against in use to inhibit flow therepast.

11. A vibratory separator as claimed in any preceding claim, wherein said at least one dam (200) comprises large holes (201) to allow a portion of solids laden drilling fluid thereunder.

12. A vibratory separator as claimed in any preceding claim, wherein said at least one dam (272,274) comprises two spaced apart dams (272a,272b,274a,274b) with a gap therebetween.

13. A vibratory separator as claimed in any preceding claim, wherein the at least one dam (271) has two ends and is configured and positioned so that gaps are provided around the two ends within the basket (262a,262b).

14. A vibratory separator as claimed in any preceding claim, wherein the said at least one dam (272,273,274,276) is a plurality of spaced-apart dams (272a,272b,273a,273b,273c,273d,274a,274b,276a,276b,276c).

15. A vibratory separator as claimed in any preceding claim, wherein said at least one dam ((272,273,274) is a series of spaced apart dams (272a,272b, 273a,273b,273c,273d,274a,274b) spanning across said at least one screen (246).

16. A vibratory separator as claimed in any preceding claim, wherein said basket (10) comprises at least two opposed walls (262a,262b) between which is arranged said at least one screen.

17. A vibratory separator as claimed in any preceding claim, wherein said-basket (10) is mounted on springs.

18. A vibratory separator as claimed in any preceding claim, further comprising at least one further dam (51,52,54) to define a third distinct space in which solids laden drilling fluid is separated.

19. A vibratory separator as claimed in Claim 18, further comprising at least one further dam (51,52,54) to define a fourth distinct space in which solids laden drilling fluid is separated.

20. A vibratory separator as claimed in any preceding claim, further comprising a fitting to allow replacement of said at least one dam (230).

21. A vibratory separator as claimed in any preceding claim, wherein the basket (220) is coupled to said mechanism (224) for vibrating said at least one screen225,226,227,228), such that the basket (220) is vibratable therewith and the at least one dam (230) is connected to the basket (220) and vibratable therewith.

22. A vibratory separator as claimed in any preceding claim, wherein the at least one dam (245) is isolated from the at least one vibrating screen.

23. A vibratory separator as claimed in any preceding claim, wherein the at least one dam (230) is positioned for forming a pool of solids laden drilling fluid over the at least one screen (225).

24. A vibratory separator as claimed in any preceding claim, further comprising at least a second screen (226,227,228) wherein the at least one dam (230) is positioned for forming a first pool of solids laden drilling fluid over said first screen (225) and second pool of solids laden drilling fluid over the second screen (226,227,228).

25. A vibratory separator as claimed in any preceding claim, wherein the at least one dam (45) is configured and positioned so that a portion of the solids laden drilling fluid is flowable over the at least one dam (45).

26. A vibratory separator as claimed in any preceding claim, wherein the at least one dam (320) has a first part (322) and a second part (324), the first part extending substantially vertical (322) with respect to the basket (290), the second part (324) projecting from the first part (322) and extending non-vertically with respect to the basket (290).

27. A vibratory separator as claimed in any preceding claim, wherein said basket (290) has a wall (242), at least one end screen (295) over the at least wall defining a channel through which drilling fluid flows.

28. A vibratory separator as claimed in any preceding claim, wherein said at least one screen (225) comprises a support and screening material on the support.

29. A vibratory separator as claimed in Claim 28, wherein the support is a frame.

30. A method for separating solids from a solids laden drilling fluid, the method comprising the steps of introducing solids laden drilling fluid into a vibratory separator having a basket (220), at least one screen (225-8) and a mechanism for vibrating said at least one screen (225-8), **characterised in that** at least one dam (230) is arranged above said at least one screen (225-8) and spaced therefrom wherein a portion of solids laden drilling fluid flows therebetween such that, in use, first and second pools of solids laden drilling fluid form in corresponding first (236) and second (236) distinct spaces.

## Patentansprüche

1. Vibrationssichter zum Trennen von Feststoffen von einem mit Feststoffen befrachteten Bohrfluid, wobei der Vibrationssichter einen Korb (220), wenigstens ein Sieb (225, 226) und einen Mechanismus (224) zum Vibrierenlassen des wenigstens einen Siebs umfasst, wobei der Vibrationssichter ferner wenigstens eine Sperre (230) umfasst, um den Korb (220) in einen ersten Raum (236) und einen zweiten Raum (232), die voneinander verschieden sind, aufzuteilen, **dadurch gekennzeichnet, dass** die Sperre (230) über dem wenigstens einen Sieb (225) angeordnet und hiervon beabstandet ist, um einen Anteil des mit Feststoffen befrachteten Bohrfluids dazwischen zuzulassen, derart, dass sich im Gebrauch in dem ersten Raum (236) und in dem zweiten Raum (232), die voneinander verschieden sind, ein erstes Becken bzw. ein zweites Becken von mit Feststoffen befrachtetem Bohrfluid bilden.

2. Vibrationssichter nach Anspruch 1, wobei der Vibrationssichter Seitenwände (222) besitzt, wobei das Sieb dazwischen angeordnet ist und die wenigstens eine Sperre sich zwischen den Seitenwänden erstreckt.

3. Vibrationssichter nach Anspruch 1 oder 2, wobei das wenigstens eine Sieb (225) im Wesentlichen horizontal orientiert ist.

4. Vibrationssichter nach Anspruch 1 oder 2, wobei das wenigstens eine Sieb (226) in einem Bereich von der Horizontalen bis 15° zur Horizontalen orientiert ist.

5. Vibrationssichter nach einem vorhergehenden Anspruch, wobei das wenigstens eine Sieb (225, 226) ein ebenes Sieb ist.

6. Vibrationssichter nach einem vorhergehenden Anspruch, wobei das wenigstens eine Sieb (225, 226) ein gewelltes Sieb ist.

7. Vibrationssichter nach einem vorhergehenden Anspruch, wobei die wenigstens eine Sperre (230) eine Feststoffbarriere umfasst.

8. Vibrationssichter nach einem vorhergehenden Anspruch, wobei die wenigstens eine Sperre (60) ein perforiertes Material umfasst.

9. Vibrationssichter nach Anspruch 8, wobei die wenigstens eine Sperre (60, 200) ferner einen Strömungskanal (64, 202) umfasst, um Bohrfluid zu erlauben, in den Unterlauf von Bohrfluid von dem Vibrationssichter zu strömen.

10. Vibrationssichter nach einem vorhergehenden Anspruch, wobei die wenigstens eine Sperre (45) eine im Wesentlichen vertikale Wand umfasst, gegen die das mit Feststoffen befrachtete Bohrfluid im Gebrauch anströmt, um eine Strömung an ihr vorbei zu verhindern.

11. Vibrationssichter nach einem vorhergehenden Anspruch, wobei die wenigstens eine Sperre (200) große Löcher (201) aufweist, um einen Anteil von mit Feststoffen befrachtetem Bohrfluid darunter zuzulassen.

12. Vibrationssichter nach einem vorhergehenden Anspruch, wobei die wenigstens eine Sperre (272, 274) zwei voneinander beabstandete Sperren (272a, 272b, 274a, 274b) mit einem Spalt dazwischen umfasst.

13. Vibrationssichter nach einem vorhergehenden Anspruch, wobei die wenigstens eine Sperre (271) zwei Enden besitzt und so konfiguriert und positioniert ist, dass die Spalte um die zwei Enden in dem Korb (262a, 262b) vorgesehen sind.

14. Vibrationssichter nach einem vorhergehenden Anspruch, wobei die wenigstens eine Sperre (272, 273, 274, 276) mehrere voneinander beabstandete Sperren (272a, 272b, 273a, 273b, 273c, 273d, 274a, 274b, 276a, 276b, 276c) umfasst.

15. Vibrationssichter nach einem vorhergehenden Anspruch, wobei die wenigstens eine Sperre (272, 273, 274) eine Reihe von voneinander beabstandeten Sperren (272a, 272b, 273a, 273b, 273c, 273d, 274a, 274b) umfasst, die das wenigstens eine Sieb (276) überspannen.

16. Vibrationssichter nach einem vorhergehenden Anspruch, wobei der Korb (10) wenigstens zwei gegenüberliegende Wände (262a, 262b) umfasst, zwischen denen das wenigstens eine Sieb angeordnet ist.

17. Vibrationssichter nach einem vorhergehenden Anspruch, wobei der Korb (10) auf Federn montiert ist.

18. Vibrationssichter nach einem vorhergehenden Anspruch, der ferner wenigstens eine Sperre (51, 52, 54) umfasst, um einen dritten verschiedenen Raum zu definieren, in dem mit Feststoffen befrachtetes Bohrfluid getrennt wird.

19. Vibrationssichter nach Anspruch 18, der ferner wenigstens eine weitere Sperre (51, 52, 54) umfasst, um einen vierten verschiedenen Raum zu definieren, in dem mit Feststoffen befrachtetes Bohrfluid getrennt wird.

20. Vibrationssichter nach einem vorhergehenden Anspruch, der ferner einen Beschlag umfasst, um den Austausch der wenigstens einen Sperre (230) zuzulassen.

21. Vibrationssichter nach einem vorhergehenden Anspruch, wobei der Korb (220) mit dem Mechanismus (224) zum Vibrierenlassen des wenigstens einen Siebs (225, 226, 227, 228) gekoppelt ist, derart, dass der Korb (220) damit vibrieren kann, und die wenigstens eine Sperre (230) mit dem Korb (220) verbunden ist und damit vibrieren kann.

22. Vibrationssichter nach einem vorhergehenden Anspruch, wobei die wenigstens eine Sperre (245) von dem wenigstens einem vibrierenden Sieb isoliert ist.

23. Vibrationssichter nach einem vorhergehenden Anspruch, wobei die wenigstens eine Sperre (230) positioniert ist, um ein Becken von mit Feststoffen befrachtetem Bohrfluid über dem wenigstens einen Sieb (225) zu bilden.

24. Vibrationssichter nach einem vorhergehenden Anspruch, der ferner wenigstens ein zweites Sieb (226, 227, 228) umfasst, wobei die wenigstens eine Sperre (230) positioniert ist, um ein erstes Becken von mit Feststoffen befrachtetem Bohrfluid über dem ersten Sieb (225) und ein zweites Becken von mit Feststoffen befrachtetem Bohrfluid über dem zweiten Sieb (226, 227, 228) zu bilden.

25. Vibrationssichter nach einem vorhergehenden Anspruch, wobei die wenigstens eine Sperre (45) so konfiguriert und positioniert ist, dass ein Anteil des mit Feststoffen befrachteten Bohrfluids über die wenigstens eine Sperre (45) strömen kann.

26. Vibrationssichter nach einem vorhergehenden Anspruch, wobei die wenigstens eine Sperre (320) einen ersten Teil (322) und einen zweiten Teil (324) besitzt, wobei der erste Teil sich im Wesentlichen vertikal (322) in Bezug auf den Korb (290) erstreckt und wobei der zweite Teil (324) von dem ersten Teil (322) vorsteht und sich nicht vertikal in Bezug auf den Korb (290) erstreckt.

27. Vibrationssichter nach einem vorhergehenden Anspruch, wobei der Korb (290) eine Wand (242) besitzt und wenigstens ein Stimsieb (295) über der wenigstens einen Wand einen Kanal definiert, durch den Bohrfluid strömt.

28. Vibrationssichter nach einem vorhergehenden Anspruch, wobei das wenigstens eine Sieb (225) einen Träger und Siebmaterial auf dem Träger umfasst.

29. Vibrationssichter nach Anspruch 28, wobei der Träger ein Rahmen ist.

30. Verfahren zum Trennen von Feststoffen von mit Feststoffen befrachtetem Bohrfluid, wobei das Verfahren den Schritt des Einleitens von mit Feststoffen befrachtetem Bohrfluid in einen Vibrationssichter umfasst, wobei der Vibrationssichter einen Korb (220), wenigstens ein Sieb (225-8) und einen Mechanismus zum Vibrierenlassen des wenigstens einen Siebs (225-8) umfasst, **dadurch gekennzeichnet, dass** wenigstens eine Sperre (230) über dem wenigstens einen Sieb (225-8) angeordnet und hiervon beabstandet ist, wobei dazwischen ein Anteil von mit Feststoffen befrachtetem Bohrfluid strömt, derart, dass sich im Gebrauch in einem entsprechenden ersten Raum (236) und in einem entsprechenden zweiten Raum (236), die voneinander verschieden sind, ein erstes Becken bzw. ein zweites Becken von mit Feststoffen befrachtetem Bohrfluid bilden.

## Revendications

1. Séparateur vibrant permettant de séparer des matières solides d'un fluide de forage chargé de matières solides, le séparateur vibrant comportant un panier (220), au moins un crible (225, 226) et un mécanisme (224) pour faire vibrer ledit, au moins un, crible, ledit séparateur vibrant comportant, de plus, au moins un élément de retenue de fluide (230) servant à séparer ledit panier (220) en un premier (236) et en un second compartiments distincts, **caractérisé en ce que** ledit élément de retenue de fluide (230) est disposé au-dessus dudit au moins un crible (225) et espacé de lui afin de permettre à une partie du fluide de forage chargé de matières solides de passer entre eux de telle sorte que, en fonctionnement, des première et seconde poches de fluide de forage chargé de matières solides se forment, en correspondance, avec des premier (236) et second (232) compartiments distincts.

2. Séparateur vibrant selon la revendication 1, dans lequel ledit séparateur vibrant comporte des parois latérales (222), ledit crible étant disposé entre elles et ledit au moins un élément de retenue de fluide s'étendent entre lesdites parois latérales.

3. Séparateur vibrant selon la revendication 1 ou 2, dans lequel ledit, au moins un, crible (225) est essentiellement horizontal.

4. Séparateur vibrant selon la revendication 1 ou 2, dans lequel ledit, au moins un, crible (226) se trouve entre l'horizontale et à 15° de l'horizontale.

5. Séparateur vibrant selon l'une quelconque des revendications précédentes, dans lequel ledit, au moins un, crible (225, 226) est un crible plat.

6. Séparateur vibrant selon l'une quelconque des revendications précédentes, dans lequel ledit, au moins un, crible (225, 226) est un crible ondulé.

7. Séparateur vibrant selon l'une quelconque des revendications précédentes, dans lequel ledit au moins un élément de retenue de fluide (230) comprend une barrière solide.

8. Séparateur vibrant selon l'une quelconque des revendications précédentes, dans lequel ledit au moins un élément de retenue de fluide (60) comprend un matériau perforé.

9. Séparateur vibrant selon la revendication 8, dans lequel ledit, au moins un, élément de retenue de fluide (60, 200) comporte, de plus, un canal d'écoulement (64, 202) pour permettre au fluide de forage de s'écouler dans le courant inférieur du fluide de forage à partir du séparateur vibrant.

10. Séparateur vibrant selon l'une quelconque des revendications précédentes, dans lequel ledit, au moins un, élément de retenue de fluide (45) comporte une paroi essentiellement verticale contre laquelle ledit fluide de forage chargé de matières solides afflue en fonctionnement afin d'empêcher un écoulement au-delà de lui.

11. Séparateur vibrant selon l'une quelconque des revendications précédentes, dans lequel ledit au moins un élément de retenue de fluide (200) comporte de grands trous (201) afin de permettre à une partie du fluide de forage chargé de matières solides de passer dessous.

12. Séparateur vibrant selon l'une quelconque des revendications précédentes, dans lequel ledit, au moins un, élément de retenue de fluide (272, 274) comporte deux zones de retenue séparées (272a, 272b, 274a, 274b) présentant entre eux un espacement.

13. séparateur vibrant selon l'une quelconque des revendications précédentes, dans lequel le, au moins un, élément de retenue de fluide (271) présente deux extrémités et est configuré et positionné de façon que des espaces soient fournis autour des deux extrémités à l'intérieur du panier (262a, 262b).

14. Séparateur vibrant selon l'une quelconque des revendications précédentes, dans lequel ledit, au moins un, élément de retenue de fluide (272, 273, 274, 276) est constitué d'une pluralité de zones de retenue séparées (272a, 272b, 273a, 273b, 273c, 273d, 274a, 274b, 276a, 276b, 276c).

15. Séparateur vibrant selon l'une quelconque des revendications précédentes, dans lequel ledit, au moins un, élément de retenue de fluide (272, 273, 274) est constitué d'une série de zones de retenue séparées (272a, 272b, 273a, 273b, 273c, 273d, 274a, 274b) se déployant à travers ledit au moins un crible (246).

16. Séparateur vibrant selon l'une quelconque des revendications précédentes, dans lequel ledit panier (10) comprend au moins deux parois opposées (262a, 262b) entre lesquelles est agencé ledit au moins un crible.

17. Séparateur vibrant selon l'une quelconque des revendications précédentes, dans lequel ledit panier (10) est monté sur ressorts.

18. Séparateur vibrant selon l'une quelconque des revendications précédentes, comprenant, de plus au moins un autre élément de retenue de fluide (51, 52, 54) afin de définir un troisième compartiment distinct dans lequel est séparé le fluide de forage chargé de matières solides.

19. Séparateur vibrant selon la revendication 18 comprenant, de plus, au moins un élément de retenue de fluide supplémentaire (51, 52, 54) pour définir un quatrième compartiment distinct dans lequel est séparé le fluide de forage chargé de matières solides.

20. Séparateur vibrant selon l'une quelconque des revendications précédentes, comportant, de plus, une pièce d'ajustage pour permettre le remplacement dudit au moins un élément de retenue de fluide (230).

21. Séparateur vibrant selon l'une quelconque des revendications précédentes, dans lequel le panier (220) est couplé audit mécanisme (224) permettant de faire vibrer ledit au moins un crible (225, 226, 227, 228) de telle sorte que le panier (220) puisse vibrer avec lui et que le au moins un élément de retenue de fluide (230) soit raccordé au panier (220) et puisse vibrer avec lui.

22. Séparateur vibrant selon l'une quelconque des revendications précédentes, dans lequel, au moins un, élément de retenue de fluide (245) est isolé du, au moins un, crible vibrant.

23. Séparateur vibrant selon l'une quelconque des revendications précédentes, dans lequel le, au moins un barrage, (230) est positionné de façon à former une poche de fluide de forage chargé de matière solides sur le, au moins un, crible (225).

24. Séparateur vibrant selon l'une quelconque des revendications précédentes comprenant, de plus, au moins un second crible (226, 227, 228) dans lequel le au moins un élément de retenue de fluide (230) est positionné pour former une première poche de fluide de forage chargé de matières solides sur ledit premier crible (225) et une seconde poche de fluide de forage chargé de matières solides sur le second crible (226, 227, 228).

25. Séparateur vibrant selon l'une quelconque des revendications précédentes, dans lequel le, au moins un, élément de retenue de fluide (45) est configuré et positionné de telle sorte qu'une partie du fluide de forage chargé de matières solides puisse s'écouler sur le, au moins un, crible (45).

26. Séparateur vibrant selon l'une quelconque des revendications précédentes, dans lequel le, au moins un, élément de retenue de fluide (320) comporte une première partie (322) et une seconde partie (324), la première partie s'étendant de façon essentiellement verticale (322) par rapport au panier (290), la seconde partie (324) s'avançant à partir de la première partie (322) et s'étendant de façon non verticale par rapport au panier (290).

27. Séparateur vibrant selon l'une quelconque des revendications précédentes, dans lequel ledit panier (290) comporte une paroi (242), au moins un crible d'extrémité (295) sur la, au moins une, paroi définissant un canal à travers lequel s'écoule le fluide de forage.

28. Séparateur vibrant selon l'une quelconque des revendications précédentes, dans lequel ledit au moins un crible (225) comporte un support et un matériau de criblage sur le support.

29. Séparateur vibrant selon la revendication 28, dans lequel le support est un châssis.

30. Procédé permettant de séparer des matières solides à partir d'un fluide de forage chargé de matières solides, le procédé comprenant les étapes consistant à introduire un fluide de forage chargé de matières solides dans un séparateur vibrant comportant un panier (220), au moins un crible (225-8) et un mécanisme servant à faire vibrer ledit, au moins un, crible (225-8), **caractérisé en ce que** au moins un élément de retenue de fluide (230) est agencé au-dessus dudit, au moins un, crible (225-8) et placé à distance de celui-ci, dans lequel une partie du fluide de forage chargé de matières solides s'écoule entre eux de telle sorte que, en fonctionnement, des première et seconde poches de fluide de forage chargé de matières solides se forment, en correspondance, avec des premier (236) et second (236) compartiments distincts.
